# EUROPEAN PATENT SPECIFICATION

(11) **EP 0 985 832 B1**
(45) Date of publication and mention of the grant of the patent: **29.10.2003**
(21) Application number: 99306539.0
(22) Date of filing: 19.08.1999
(51) Int. Cl.: F16B 2/02, F16B 21/09

(54) **Clip**
Clip
Clip

(30) Priority: 10.09.1998 GB 9819763
(43) Date of publication of application: 15.03.2000
(73) Proprietor: ITT MANUFACTURING ENTERPRISES, INC., Wilmington, Delaware 19801 (US)
(72) Inventor: Powell, David, Basingstoke, Hampshire RG22 5PP (GB)
(74) Representative: Ertl, Nicholas Justin

(56) References cited:
- GB-A- 2 001 726
- US-A- 3 871 088
- US-A- 4 505 006
- US-A- 4 738 424

## Description

The present invention relates to a combination of a clip and a body, a method of securing an object to a body and a combination of a clip and a body.

Frequently, when a new peripheral is added to a computer, when a part of an engine is replaced, or when a new piece of equipment is installed in an office, the number of free cables, pipes, conduits and the like around the new addition also increases. In computers and electrical equipment this can leave untidy, difficult to maintain areas where cables come together into a knot. In engines, a loose cable or pipe in contact with a hot area of the engine could split, melt or perish and damage the engine or cause it to fail.

Numerous devices for securing pipes or cables together or to another body have been suggested in the past. The cable tie is commonly used for such purposes. It comprises an elongate plastics strip with a locking mechanism at one end. One of the elongate surfaces of the strip is toothed such that when the other end of the strip is looped around and fed through the locking mechanism, the teeth engage the locking mechanism thereby providing a secure loop for holding the cables together. The locking mechanism and teeth cooperate such that the strip can be fed further through the locking mechanism, thereby tightening the loop, but cannot be fed back to loosen the loop. In addition to being looped around one or more cables, the cable tie may be fed through one or more slots in a body to secure the cable(s) to the body. It is very easy to over tighten a cable tie and as the width of the tie is commonly narrow, such tightening can cause the tie to crush, or cut into, the held cable(s) or pipe(s). This could damage them or, in the case of shielded cables, reduce their shielding effectiveness. Furthermore, the cable tie must be cut to remove one or more of the cables, thus destroying the tie and requiring a replacement.

US Patent 4,505,006 discloses a cable clamp. The clamp has a central passageway surrounded by a plurality of holding fingers that are arranged to converge conically toward each other and the object to be held.

The present invention seeks to provide a reusable combination of a clip and a body for securing an object to the body. The present invention further seeks to provide a combination of a clip and a body that, once attached in-situ to the body, permits securement to, and release of an object from, securement on the body. The present invention also seeks to provide a clip that can secure any one of a plurality of objects having differing cross-sections without damaging the objects. The present invention further seeks to provide a method for securing an object to a body.

According to one aspect of the invention, there is provided a combination of a clip and a body, the clip comprising a pair of opposing jaws, and locking means which is insertable into an aperture in the body and is displaceable in the aperture between a first position and a second position, thereby to cause the opposing jaws to move from an open position towards a closed position.

The clip may be displaceable between the second position and the first position, thereby to cause the opposing jaws to return towards the open position. The locking means may include one or more securing parts for retention of the clip in the aperture. The securing part or parts may comprise one or more projections for cooperating with one or more sides of the aperture.

The opposing jaws, when substantially closed, may define between them a cavity in which at least a part of an object may be held. The cavity may be substantially cylindrical. It may comprise a through hole for holding at least a length of an elongate object. The through hole may have a cross-section substantially the same as a pipe or cable. The opposing jaws may be slotted.

The clip may be a moulded plastics part hinged or sprung along a centre axis, having a locking means part at each side of the hinge or spring extending to a jaw at opposing extremities of the plastics part, wherein the clip, when partially folded about the hinge or spring, permits insertion of the locking means into the aperture.

The displacement of the clip from the first position to the second position may cause the sides of the aperture to press the locking means parts and therefore the jaws together.

One or more sides of the aperture may be tapered. The aperture may be an elongate slot. The slot, in the elongate direction, may include a length having a first width, tapering to a length having a second, narrower, width, followed by a further length having the first width, tapering to a length having the second, narrower, width.

According to a further aspect of the invention, there is provided a method of securing an object to a body comprising the steps of inserting the locking means of a clip of the combination such as that that previously defined into an aperture in the body, inserting the object, or part of the object, to be secured between the pair of opposing jaws of the clip and displacing the locking means in the aperture thereby causing the opposing jaws to engage and clamp the object, or part of the object.

The step of inserting the locking means into the aperture may include the step of engaging one or more securing parts of the locking means with one or more sides of the aperture. The method may also include the step of further displacing the locking means in the aperture causing the opposing jaws to disengage and release the object, or part of the object, for removal of the object. The step of inserting the locking means into the aperture may comprise inserting the locking means into the lengths of the aperture having the first width.
The step of displacing the locking means in the aperture may comprise the step of sliding the locking means towards the lengths of the aperture having the second, narrower width.

In order that the invention and its various other preferred features may be understood more easily, some embodiments thereof will now be described, by way of example only, with reference to the accompanying drawings, in which:-
Figure 1 is an end view of a clip constructed in accordance with the present invention,
Figure 2 is a view of an aperture in a body suitable for receipt of the clip of Figure 1,
Figure 3 is a cross-sectional view of the clip of Figure 1 in an open position in the aperture in the body of Figure 2,
Figure 4 is a cross-sectional view of the clip of Figure 1 in a closed position in the aperture of Figure 2, and
Figure 5 is a side view of the clip of Figures 1, 3 and 4 holding a length of cable.
Figure 6 is a cross-sectional view of a clip constructed in accordance with a preferred embodiment of the present invention.

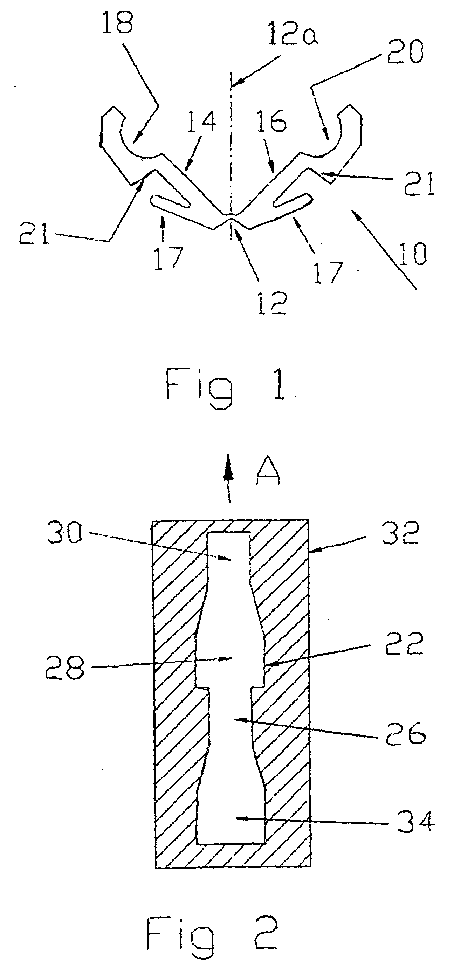

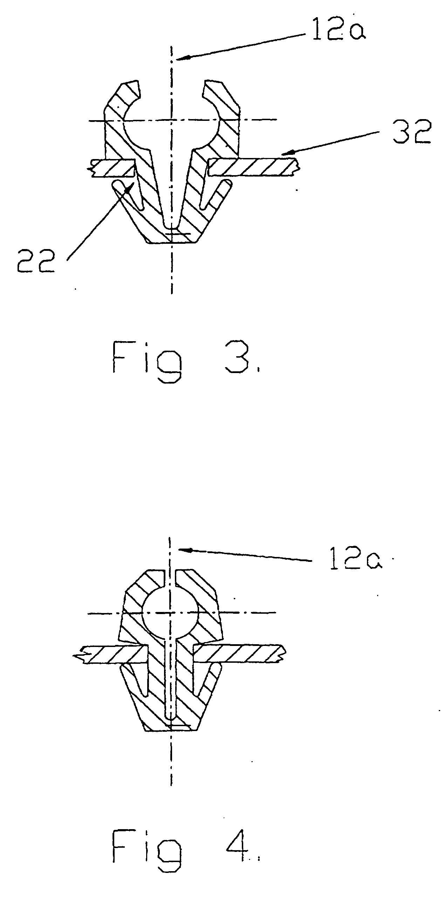

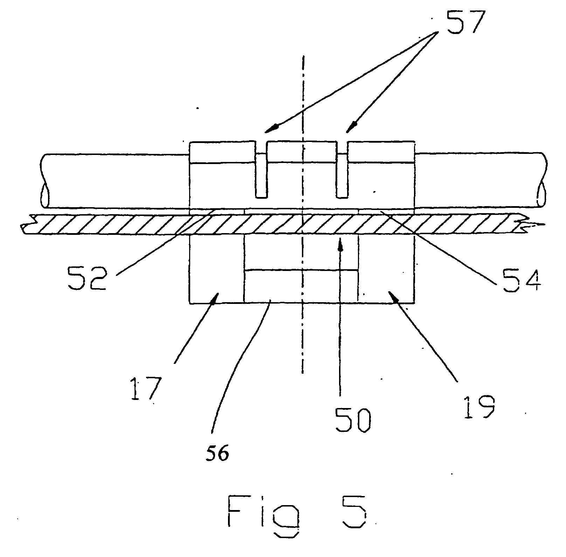

Figure 1 is an end view of a clip of to an embodiment of the present invention. The clip is formed as a single plastics part 10. The part 10 has a hinge 12 along a centre axis 12a. Adjacent the centre axis is locking means comprising two locking means parts 14, 16. Each locking means part 14, 16 extends to a jaw 18, 20 at opposing extremities of the part 10. The part 10 is foldable about the hinge 12 to bring the locking means parts 14, 16 and the opposing jaws 18, 20 together. Each locking means part 14, 16 includes a slot (shown as 50 in Figure 5), the slot extending parallel to the gripping axis of the clip. Each locking means part preferably includes a pair of projections 17, 19 (shown in Figure 5). Each pair of projections is at an opposing lengthwise end of the clip.

Figure 2 is a view of an aperture 22 in a body 32 into which the clip may be inserted. The aperture has a first length 24 having a first width. The first length 24 tapers inwardly to a second length 26 having a second width. A third length 28 adjoins the second length 26, the third length having the first width. The third length 28 tapers inwardly to a fourth length 30 having the second width.

The insertion and operation of the clip 10 into with the aperture 22 will now be described with reference to Figures 3 and 4. Figure 3 shows a sectional view of the clip of Figure 1 inserted into the aperture 22 of Figure 2 in a body 32. To insert the clip 10, it is folded about the hinge 12 so that the opposing jaws are brought together. The clip is then positioned over the aperture so that the pairs of projections 17 and 19 are positioned over the first length 24 and the third length 28 respectively. The construction of the clip is preferably such that the width of the clip between each opposing pair of projections 17, 19, when the clip is completely folded about the hinge, is greater than the first width of the aperture 22. As the clip 10 is pushed into the aperture 22, the projections 17 and 19 are pressed by the sides of the aperture towards the centre axis 12a so that they are substantially parallel to the centre axis 12a, reducing the width of the clip 10 to less than that of the first width of the aperture 22 and allowing the clip to enter the aperture. Insertion of the clip 10 into the aperture 22 allows the projections to pass therethrough such that an abutment 21, provided by the exterior of the jaw portions, contacts the insertion side of the body 32, at which position the projections 17, 19, after deformation during insertion, return to their original projecting positions so as to engage the side of the body 32 opposite the insertion side and thereby secure the clip 10 against removal from the aperture 22.

Once inserted into the aperture 22, the clip 10 can be slightly unfolded about the hinge to leave the jaws in an open position as shown in Figure 3. The slots 50 run parallel to the length 26 of the aperture permitting the expansion of the jaws in the aperture without the locking means parts contacting the edges adjacent the narrower length 26 of the aperture. Whilst the jaws are in the open position, an object to be secured such as a cable, pipe or conduit may be placed between the jaws or removed from the jaws.

By sliding the clip along the aperture in a direction A as shown in Figure 2, the clip is moved to a closed position shown in Figure 4, securing any object that is in the jaws. As the clip slides along in the aperture, surfaces 52 and 54 (shown in Figure 5) of the locking means part 14 and corresponding surfaces of locking means part 16 come into contact with the tapering edges of the aperture leading to lengths 26 and 30 of the aperture. The taper decreases the width of the aperture, pressing the two locking means parts 14, 16 and therefore the opposing jaws 18, 20 together. By the time the areas 52 and 54 are in the second length 26 and fourth length 30 of the aperture, they are pressed together, thereby substantially closing the jaws 18, 20 as shown in Figure 4. Sliding the clip back in the opposite direction allows the jaws 18, 20 to be opened and permits the removal or replacement of the held object.

Figure 5 also shows an optional refinement of the present invention in which the opposing jaws 18, 20 have one or more slots 57, preferably running parallel to the centre axis 12a of the clip 10. Slotting of the jaws 18, 20, makes the jaws more flexible and less likely to crush the object when they are closed and also enables an object to be held which has a cross section greater than the cross section of the cavity defined by the jaws 18, 20 when substantially closed.

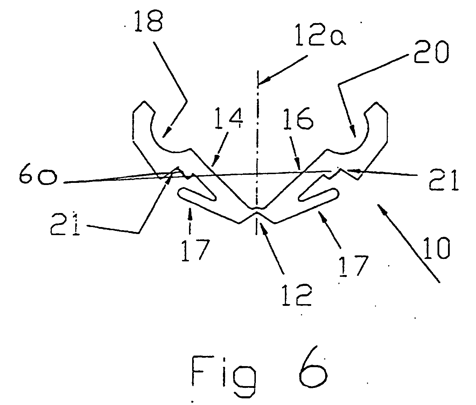

Figure 6 shows a preferred construction of the present invention. In this construction, the need for the slot 50, as shown in Figure 5, is obviated by the addition of four pads 60 on surfaces 52 and 54, one pad 60 above each projection 17, 19. The pads 60 may be integral to the clip 10 or adhered to it after moulding. Once the clip 10 is inserted into the aperture 22, the pads 60 abut the sides of the aperture 24, 28 having the first width and the area of the clip 10, where there would previously have been the aperture 50, abuts the second length 26 having the second width. When the clip 10 is closed by sliding the clip 10 and therefore the pads 60 into the lengths 26, 30 having the narrower width, the pads 60 act in the same manner as surfaces 52, 54 did in the previous embodiments, thereby substantially closing the jaws.

The foregoing embodiments are presented only as examples of the present invention. The clip could be of a multi-part construction, for example, the jaws could be hinged together without the locking means, the hinge inserted into the aperture and a separate locking means attached to the hinge from the underside of the aperture. Equally the clip could be assembled from one or more plastics parts prior to insertion into the aperture. The projections 17, 19 could be replaced by another form of securement attachable to the clip from the underside of the aperture after insertion.

The locking means could comprise more than one hinged pair of locking means parts, for example the area 56 of Figure 5 may be absent. Furthermore the locking means need not run all the way along the length of the clip. Depending on the configuration of the locking means, the profile of the aperture may be altered. If there are more than one hinged pair of locking means parts, the aperture could be formed of a corresponding number of slots, each slot having a length of the first width tapering to a length of the second width. If the locking means is only situated in the centre of the length of the clip, a single aperture having a first width tapering to a second width would be sufficient.

The aperture need not have the profile described, it could be a single tapering slot, having a substantially triangular shape, allowing locking means having different widths to be used, the locking process would comprise sliding the clip in the slot as far as possible. In this way, clips with narrower locking means would slide further along the aperture than others during locking. The aperture could have an outwardly tapering length following the narrower length that leads to a wider length so that the clip *may* slide from an open position to a closed position and then onto a further open position. The aperture could have a 3-dimensional profile where the sides of the aperture are ramped and the locking process slides the clip into the aperture. In this way, where the clips are used in a linear array, each for securing one of a plurality of data cables into a computer hub, for example, the open clips would be raised above those already holding cables facilitating easier insertion/removal of cables.

The jaws could define between them a substantially rectangular through hole for holding an array of cables, pipes or conduits stacked one on top of each other or side by side. The jaws could define between them a series of through holes, each for holding a cable. The opposing jaws could define a cavity instead of a through hole between them so that an end of an object may be held. Alternatively, the cross-section of the cavity or through hole defined by the jaws may taper or abruptly change along the length of the clip permitting a cable prepared for termination to be held at or near to the end to be terminated. Areas of the plastics surfaces of the clip may be plated with a electrically conducting material so that the clip could be used to connect and terminate the shielding of shielded cables to the body.

Preferably at least the hinge part of the clip is made from a flexible, resiliently sprung plastics material so that the clip is sprung and naturally returns to the open position from the closed position when the positioning in the aperture permits.

## Claims

1. A combination of a clip and a body, the clip comprising a pair of opposing jaws (18, 20), and locking means (14, 16) which is insertable into an aperture (22) in the body (32), **characterised in that** the clip is displaceable in the aperture (22) between a first position and a second position, thereby to cause the opposing jaws (18, 20) to move from an open position towards a closed position.

2. A combination as claimed in claim 1, wherein the clip is displaceable between the second position and the first position, thereby to cause the opposing jaws (18, 20) to return towards the open position.

3. A combination as claimed in any one of the preceding claims, wherein the locking means (14, 16) includes one or more securing parts (17, 19) for retention of the clip in the aperture.

4. A combination as claimed in claim 3, wherein the securing part or parts (17, 19) comprise one or more projections for cooperating with one or more sides of the aperture (22).

5. A combination as claimed in any of the preceding claims, wherein the opposing jaws (18, 20), when substantially closed, define between them a cavity in which at least a part of an object may be held.

6. A combination as claimed in claim 5, wherein the cavity is substantially cylindrical.

7. A combination as claimed in claim 5 or 6, wherein the cavity comprises a through hole for holding at least a length of an elongate object.

8. A combination as claimed in claim 7, wherein the through hole has a cross-section substantially the same as a pipe or cable.

9. A combination as claimed in any one of claims 5 to 8, wherein the opposing jaws (18, 20) are slotted.

10. A combination as claimed in any one of the preceding claims, wherein the clip is a moulded plastics part hinged or sprung along a centre axis (12a), a locking means part (14, 16) at each side of the hinge or spring extending to a jaw (18, 20) at opposing extremities of the plastics part, wherein the clip, when partially folded about the hinge or spring, permits insertion of the locking means into the aperture.

11. A combination as claimed in claim 10, wherein the displacement of the clip from the first position to the second position causes the sides of the aperture (22) to press the locking means parts (14, 16) and therefore the jaws together (18, 20).

12. A combination as claimed in any of the preceding claims, wherein one or more sides of the aperture (22) are tapered.

13. A combination as claimed in any of the preceding claims, wherein the aperture (22) is an elongate slot.

14. A combination as claimed in claim 13, wherein the slot, in the elongate direction, includes a length (34) having a first width, tapering to a length (26) having a second, narrower, width, followed by a further length (28) having the first width, tapering to a further length (30) having the second, narrower, width.

15. A method of securing an object to a body (32) comprising the steps of inserting the locking means (14, 16) of a clip of a combination as claimed in any one of claims 1 to 14 into the corresponding aperture (22) in the body (32), inserting the object, or part of the object, to be secured between the pair of opposing jaws (18, 20) of the clip, **characterised by** the step of displacing the locking means in the aperture (22) thereby causing the opposing jaws (18, 20) to engage and clamp the object, or part of the object.

16. A method as claimed in claim 15, wherein the step of inserting the locking means (14, 16) into the aperture (22) includes the step of engaging one or more securing parts (17, 19) of the locking means with one or more sides of the aperture (22).

17. A method as claimed in claim 15 or 16, including the step of further displacing the locking means (14, 16) in the aperture (22) causing the opposing jaws (18, 20) to disengage and release the object, or part of the object, for removal of the object.

18. A method as claimed in any one of claims 15 to 17, wherein the aperture comprises a slot which, in the elongate direction includes a length (34) having a first width, tapering to a length (26) having a second, narrower, width, followed by a further length (28) having the first width, tapering to a length (30) having the second, narrower, width, and the step of inserting the locking means into the aperture comprises inserting the locking means into the lengths (34, 28) of the aperture having the first width.

19. A method as claimed in claim 18, wherein the step of displacing the locking means in the aperture comprises the step of sliding the locking means towards the lengths (26, 30) of the aperture having the second, narrower width.

## Patentansprüche

1. Kombination aus einer Schelle und einem Körper, welche Schelle ein Paar von einander gegenüberliegenden Backen (18, 20) und eine Verriegelungseinrichtung (14, 16) enthält, die in eine Öffnung (22) in dem Körper (32) einführbar ist, **dadurch gekennzeichnet, dass** die Schelle in der Öffnung (22) zwischen einer ersten Position und einer zweiten Position verschiebbar ist, wodurch die einander gegenüberliegenden Backen (18, 20) veranlasst werden, sich aus einer offenen Position in eine geschlossene Position zu bewegen.

2. Kombination nach Anspruch 1, bei welcher die Schelle zwischen der zweiten Position und der ersten Position verschiebbar ist, wodurch die einander gegenüberliegenden Backen (18, 20) veranlasst werden, in ihre offene Position zurückzukehren.

3. Kombination nach einem der vorstehenden Ansprüche, bei welcher die Verriegelungseinrichtung (14, 16) einen oder mehrere Halteteile (17, 19) enthält, um die Schelle in der Öffnung zurückzuhalten.

4. Kombination nach Anspruch 3, bei welcher der Halteteil bzw. die Halteteile (17, 19) einen oder mehrere Vorsprünge zur Zusammenwirkung mit einer oder mehreren Seiten der Öffnung (22) enthalten.

5. Kombination nach einem der vorstehenden Ansprüche, bei welcher die einander gegenüberliegenden Backen (18, 20) dann, wenn sie im wesentlichen geschlossen sind, zwischen sich einen Hohlraum bilden, in dem mindestens ein Teil eines Gegenstandes gehalten werden kann.

6. Kombination nach Anspruch 5, bei welcher der Hohlraum im wesentlichen zylindrisch ist.

7. Kombination nach Anspruch 5 oder 6, bei welcher der Hohlraum ein Durchgangsloch zum Halten mindestens eines Längenabschnitts eines länglichen Gegenstandes enthält.

8. Kombination nach Anspruch 7, bei welcher das Durchgangsloch einen Querschnitt hat, der im wesentlichen gleich dem eines Rohres oder Kabels ist.

9. Kombination nach einem der Ansprüche 5 bis 8, bei welcher die einander gegenüberliegenden Backen (18, 20) geschlitzt sind.

10. Kombination nach einem der vorstehenden Ansprüche, bei welcher die Schelle ein gegossenes Kunststoffteil ist, das entlang einer Mittelachse (12a) klappbar oder federnd ist, wobei ein Verriegelungseinrichtungsteil (14, 16) an jeder Seite des Gelenks oder der Federeinrichtung zu einer Backe (18, 20) an einander gegenüberliegenden Teilen des Kunststoffteils verläuft, wobei die Schelle dann, wenn sie teilweise um das Gelenk oder die Federeinrichtung gefaltet wird, das Einführen der Verriegelungseinrichtung in die Öffnung erlaubt.

11. Kombination nach Anspruch 10, bei welcher die Verschiebung der Schelle aus der ersten Position in die zweite Position die Seiten der Öffnung (22) veranlasst, die Verriegelungseinrichtungsteile (14, 16) und damit die Backen (18, 20) zusammenzupressen.

12. Kombination nach einem der vorstehenden Ansprüche, bei welcher eine oder mehrere Seiten der Öffnung (22) konisch verlaufen.

13. Kombination nach einem der vorstehenden Ansprüche, bei welcher die Öffnung (22) ein länglicher Schlitz ist.

14. Kombination nach Anspruch 13, bei welcher der Schlitz in Längsrichtung einen Längenabschnitt (34) mit einer ersten Breite enthält, der zu einem Längenabschnitt (26) mit einer zweiten, schmaleren Breite verjüngt ist, worauf ein weiterer Längenabschnitt (28) mit der ersten Breite folgt, der zu einem weiteren Längenabschnitt (30) mit der zweiten, schmaleren Breite verjüngt ist.

15. Verfahren zum Befestigen eines Gegenstandes an einem Körper (32), enthaltend die Schritte des Einführens der Verriegelungseinrichtung (14, 16) einer Schelle einer Kombination nach einem der Ansprüche 1 bis 14 in die entsprechende Öffnung (22) des Körpers (32), des Einführens des Gegenstandes oder eines Teiles des Gegenstandes, der zu befestigen ist, zwischen dem Paar von einander gegenüberliegenden Backen (18, 20) der Schelle, **gekennzeichnet durch** den Schritt des Verschiebens der Verriegelungseinrichtung in der Öffnung (22), wodurch die einander gegenüberliegenden Backen (18, 20) veranlasst werden, den Gegenstand oder den Teil des Gegenstandes zu erfassen und festzuklemmen.

16. Verfahren nach Anspruch 15, bei welchem der Schritt des Einführens der Verriegelungseinrichtung (14, 16) in die Öffnung (22) den Schritt enthält, bei dem ein oder mehrere Befestigungsteile (17, 19) der Verriegelungseinrichtung mit einer oder mehreren Seiten der Öffnung (22) in Eingriff gebracht werden.

17. Verfahren nach Anspruch 15 oder 16, enthaltend den Schritt des weiteren Verschiebens der Verriegelungseinrichtung (14, 16) in der Öffnung (22), was die einander gegenüberliegenden Backen (18, 20) veranlasst, außer Eingriff mit dem Gegenstand oder dem Teil des Gegenstandes zu kommen und diesen freizugeben, so dass der Gegenstand entfernt werden kann.

18. Verfahren nach einem der Ansprüche 15 bis 17, bei welchem die Öffnung einen Schlitz enthält, der in Längsrichtung einen Längenabschnitt (34) mit einer ersten Breite enthält, der zu einem Längenabschnitt (26) mit einer zweiten, schmaleren Breite verjüngt ist, worauf ein weiterer Längenabschnitt (28) mit der ersten Breite folgt, der zu einem weiteren Längenabschnitt (30) mit der zweiten, schmaleren Breite verjüngt ist, und der Schritt des Einführens der Verriegelungseinrichtung in die Öffnung das Einführen der Verriegelungseinrichtung in die Längenabschnitte (34, 28) der Öffnung, die die erste Breite haben, enthält.

19. Verfahren nach Anspruch 18, bei welchem der Schritt des Verschiebens der Verriegelungseinrichtung in der Öffnung den Schritt des Schiebens der Verriegelungseinrichtung zu den Längenabschnitten (26, 30) der Öffnung hin, die die zweite, schmalere Breite haben, enthält.

## Revendications

1. Combinaison formée par un clip et un corps, le clip comprenant une paire de mâchoires opposées (18, 20), et un organe de blocage (14, 16) qui peut être introduit dans une ouverture (22) dans le corps (32), **caractérisée en ce que** le clip est déplaçable dans l'ouverture (22) entre une première position et une seconde position, pour amener ainsi les mâchoires opposées (18, 20) à se déplacer depuis une position ouverte vers une position fermée.

2. Combinaison selon la revendication 1, dans laquelle le clip est déplaçable entre la seconde position et la première position, pour amener ainsi les mâchoires opposées (18, 20) à retourner vers la position ouverte.

3. Combinaison selon l'une ou l'autre des revendications précédentes, dans laquelle l'organe de blocage (14, 16) inclut une ou plusieurs parties d'attache (17, 19) pour la rétention du clip dans l'ouverture.

4. Combinaison selon la revendication 3, dans laquelle la ou les parties d'attache (17, 19) comprend/comprennent une ou plusieurs projections pour coopérer avec un ou plusieurs côtés de l'ouverture (22).

5. Combinaison selon l'une quelconque des revendications précédentes, dans laquelle les mâchoires opposées (18, 20) définissent entre elles, lorsqu'elles sont sensiblement fermées, une cavité dans laquelle on peut maintenir au moins une partie d'un objet.

6. Combinaison selon la revendication 5, dans laquelle la cavité est sensiblement cylindrique.

7. Combinaison selon l'une ou l'autre des revendications 5 et 6, dans laquelle la cavité comprend un trou traversant pour retenir au moins une longueur d'un objet allongé.

8. Combinaison selon la revendication 7, dans laquelle le trou traversant a une section transversale sensiblement égale à celle d'un tube ou d'un câble.

9. Combinaison selon l'une quelconque des revendications 5 à 8, dans laquelle les mâchoires opposées (18, 20) sont fendues.

10. Combinaison selon l'une quelconque des revendications précédentes, dans laquelle le clip est une pièce en matière plastique moulée articulée ou à liaison élastique le long d'un axe central (12a), une partie (14, 16) formant organe de blocage sur chaque côté de l'articulation ou de la liaison élastique s'étendant jusqu'à une mâchoire (18, 20) à des extrémités opposées de la pièce en matière plastique, et dans laquelle le clip, lorsqu'il est partiellement replié autour de l'articulation ou de la liaison élastique, permet l'introduction de l'organe de blocage dans l'ouverture.

11. Combinaison selon la revendication 10, dans laquelle le déplacement du clip depuis la première position vers la seconde position amène les côtés de l'ouverture (22) à presser les parties (14, 16) formant l'organe de blocage, et par conséquent les mâchoires (18, 20) ensemble.

12. Combinaison selon l'une quelconque des revendications précédentes, dans laquelle un ou plusieurs côtés de l'ouverture (22) sont effilés.

13. Combinaison selon l'une quelconque des revendications précédentes, dans laquelle l'ouverture (22) est une fente allongée.

14. Combinaison selon la revendication 13, dans laquelle la fente inclut, dans la direction de son allongement, une longueur (34) ayant une première largeur, qui se rétrécit vers une longueur (26) ayant une seconde largeur plus étroite, suivie par une autre longueur (28) ayant la première largeur, qui se rétrécit vers une autre longueur (30) ayant la seconde largeur plus étroite.

15. Procédé pour attacher un objet sur un corps (32), comprenant les étapes consistant à :
introduire l'organe de blocage (14, 16) d'un clip d'une combinaison selon l'une quelconque des revendications 1 à 14 dans l'ouverture correspondante (22) dans le corps (32), et
introduire l'objet ou une partie de l'objet à attacher entre la paire de mâchoires opposées (18, 20) du clip,
**caractérisé par** les étapes consistant à déplacer l'organe de blocage dans l'ouverture (22) en amenant ainsi les mâchoires opposées (18, 20) à engager et à pincer l'objet, ou une partie de l'objet.

16. Procédé selon la revendication 15, dans lequel l'étape consistant à introduire l'organe de blocage (14, 16) dans l'ouverture (22) inclut l'étape consistant à engager une ou plusieurs parties d'attache (17, 19) de l'organe de blocage avec un ou plusieurs côtés de l'ouverture (22).

17. Procédé selon l'une ou l'autre des revendications 15 et 16, incluant l'étape consistant en outre à déplacer l'organe de blocage (14, 16) dans l'ouverture (22) en amenant les mâchoires opposées (18, 20) à dégager et à relâcher l'objet, ou une partie de l'objet, pour l'enlèvement de l'objet.

18. Procédé selon l'une quelconque des revendications 15 à 17, dans lequel l'ouverture comprend une fente qui inclut, dans la direction de son allongement, une longueur (34) ayant une première largeur, qui se rétrécit vers une longueur (26) ayant une seconde largeur plus étroite, suivie par une autre longueur (28) ayant la première largeur, qui se rétrécit vers une longueur (30) ayant la seconde largeur plus étroite, et l'étape consistant à introduire l'organe de blocage dans l'ouverture comprend l'introduction de l'organe de blocage dans les longueurs (34, 28) de l'ouverture ayant la première largeur.

19. Procédé selon la revendication 18, dans lequel l'étape consistant à déplacer l'organe de blocage dans la première ouverture comprend l'étape consistant à faire coulisser l'organe de blocage vers les longueurs (26, 30) de l'ouverture ayant la seconde largeur plus étroite.
